(19) Europäisches Patentamt
European Patent Office
Office européen des brevets

(11) **EP 3 421 228 B1**

(12) **EUROPÄISCHE PATENTSCHRIFT**

(45) Veröffentlichungstag und Bekanntmachung des Hinweises auf die Patenterteilung:
**22.01.2020 Patentblatt 2020/04**

(51) Int Cl.:
**B29C 70/44** *(2006.01)*    **B29C 43/36** *(2006.01)*

(21) Anmeldenummer: **18179662.4**

(22) Anmeldetag: **25.06.2018**

(54) **VERFAHREN ZUR HERSTELLUNG VON FASERVERBUNDBAUTEILEN MITTELS EINES VAKUUM-INJEKTIONSVERFAHRENS**

METHOD FOR MANUFACTURING COMPOSITE FIBRE COMPONENTS BY MEANS OF A VACUUM INJECTION METHOD

PROCÉDÉ DE FABRICATION D'ÉLÉMENTS COMPOSITES EN FIBRES AU MOYEN D'UN PROCÉDÉ D'INJECTION SOUS VIDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Validierungsstaaten:
**MA**

(30) Priorität: 26.06.2017   DE 102017114140
15.12.2017   DE 102017130201
27.12.2017   EP 17210651

(43) Veröffentlichungstag der Anmeldung:
**02.01.2019 Patentblatt 2019/01**

(73) Patentinhaber: **Faserverbund Innovations UG (haftungsbeschränkt)**
**49477 Ibbenbüren (DE)**

(72) Erfinder: **Dierkes, Dominik**
**49477 Ibbenbüren (DE)**

(74) Vertreter: **Weeg, Thomas et al**
**Busse & Busse**
**Patent- und Rechtsanwälte Partnerschaft**
**Großhandelsring 6**
**49084 Osnabrück (DE)**

(56) Entgegenhaltungen:
DE-A1- 19 813 104      DE-A1-102009 044 515
FR-A1- 2 971 449      US-A1- 2009 273 111

**Beschreibung**

Die vorliegende Erfindung bezieht sich auf ein Verfahren zur Herstellung von Faserverbundbauteilen mittels eines Vakuum-Injektionsverfahrens nach dem Oberbegriff des Anspruchs 1.

Ein entsprechendes Herstellungsverfahren ist aus der Schrift EP 1 181 149 B1 bekannt. Der Absaugraum wird nach diesem Verfahren gebildet, indem zum Bauteilraum hin eine gasdurchlässige, aber matrixmaterialundurchlässige Membran flächig um das Halbzeug herum angeordnet wird. Auf diese Membran wird dann die gas- und matrixmaterialdichte Abdeckfolie aufgelegt. Nach dem gasdichten Abdichten des Bauteilraums und des Absaugraums gegen die das Werkzeug umgebende Umgebung wird ein Vakuum an den Absaugraum und den Bauteilraum angelegt. Danach wird ein Matrixmaterial an mindestens einer Stelle des so gebildeten Infusionsaufbaus infiltriert, indem an mindestens einer anderen Stelle des Aufbaus ein Unterdruck im gasdicht abgedichteten Innenraum des Aufbaus erzeugt wird. Auf diese Weise füllt sich der Bauteilraum mit dem Matrixmaterial, und das darin eingelegte Fasermaterial wird mit dem Matrixmaterial benetzt. Zwischen der Membran und der Abdeckfolie können Abstandhalter eingebracht sein, damit der Raum als solcher besteht und durch den Absaugraum Luft abgesaugt werden kann. Durch die den Bauteilraum und zusätzlich zumindest einen Teil des gesamten Werkzeugs flächig abdeckende Membran ergibt sich ein sehr hoher Verbrauch des teuren Membranmaterials.

Ein anderes Verfahren ist in der Schrift DE 20 2010 001 836 U1 offenbart. Der Aufbau eines gasdicht nach außen abgeschlossenen Bauteilraums erfolgt weitgehend analog zum vorstehend beschriebenen Aufbau. Die Absaugung erfolgt hier jedoch mit einer Absaugleitung, die von einer gasdurchlässigen, aber matrixmaterialundurchlässigen Membran umhüllt ist und die geeignet um den Bauteilraum herum gelegt wird, um daraus im Umgebungsbereich der Leitung Luft absaugen zu können. Da die Absaugleitung nicht flächig, sondern als Leitung verlegt wird, ist der Verbrauch an Membranfolie bei dieser Art, einen Absaugraum auszubilden, erheblich geringer.

Beide vorbekannten Verfahren sind vergleichsweise teuer in der Herstellung der Faserverbundbauteile, weil das verwendete Membranmaterial sehr teuer ist. Um das Membranmaterial so auszugestalten, dass es gasdurchlässig, aber matrixmaterialundurchlässig ist, müssen extrem kleine Löcher in das Membranmaterial eingebracht werden, was entsprechend aufwendig ist und hohe Kosten verursacht.

Aus der Schrift DE 10 2009 044 515 A1 ist es bekannt, eine mikroporöse Membran in einem Werkzeug zur Herstellung von faserverstärkten Bauteilen zu verwenden, bei der die Membran einer oleophoben Behandlung ausgesetzt wurde, um die Oleophobizität zu verbessern. Dabei wird die Beständigkeit der Membran gegen den Durchgang des Harzes erhöht.

Es ist die Aufgabe der vorliegenden Erfindung, das Verfahren zur Herstellung eines Faserverbundbauteils noch effizienter auszugestalten.

Die Aufgabe wird für ein gattungsgemäßes Verfahren nach den kennzeichnenden Merkmalen des Anspruchs 1 gelöst.

Der Absaugraum kann flächig ausgebildet sein, wie es in der Schrift EP 1 181 149 B1 beschrieben ist, oder er ist in Schlauchform ausgebildet, wie es in der Schrift DE 20 2010 001 836 U1 beschrieben ist. Es können auch beide Methoden, einen Absaugraum auszubilden, miteinander kombiniert werden, um die Vorteile beider Systeme je nach herzustellendem Bauteil auszunutzen, so dass ein Teil des Bauteilraumes flächig mit einem Trennmaterial bedeckt ist und ein anderer Teil des Bauteilraumes über eine Absaugleitung in Schlauchform evakuiert wird.

Bei dem Trennmaterial kann es sich um eine Membran aus einem flächigen monolithischen diffusionsoffenen Kunststoffmaterial handeln, das entsprechende Poren aufweist. Das flächige Kunststoffmaterial kann im Extruder hergestellt oder gegossen und danach mit den Poren versehen sein. Als Membran kommt aber auch ein verdichtetes Vlies in Betracht. Neben dem Kunststoffmaterial oder dem Vlies, die mit einer hohen Prozesssicherheit hergestellt und verwendet werden können, kommen aber auch andere Materialien als Trennmaterial in Betracht, wie beispielsweise auch Papierfilter mit einer entsprechenden Porengröße und Permeabilität. Bei den Papierfiltern können die Eigenschaften durch eine entsprechende Ausrüstung wie beispielsweise eine Imprägnierung oder Beschichtung günstig eingestellt werden. Das Trennmaterial ist so ausgestaltet, dass es einen Durchschlag von Matrixmaterial zulässt, sobald dieses das Trennmaterial erreicht. Das Matrixmaterial wird also vom Trennmaterial zu keinem Zeitpunkt gestoppt, sondern nur abgebremst.

Das matrixmaterialdurchlässige Trennmaterial ermöglicht es, Matrixmaterial aus dem Bauteilraum abzusaugen. Es ist auch möglich, dass Matrixmaterial aus dem Absaugraum wieder zurück in den Bauteilraum gelangt. Dadurch kann der Faservolumengehalt gezielt beeinflusst werden. Dadurch ist es insbesondere möglich, den Faservolumengehalt im Laminat und die Bauteildicke gezielt zu beeinflussen. Die Verwendung des offenbarten Trennmaterials schafft auf diese Weise technische Vorteile.

Es ist auch möglich, beispielsweise bei größeren herzustellenden Bauteilen, Trennmaterial mit jeweils unterschiedlichen Porengrößen über die Fläche verteilt anzuordnen, um dadurch das Einsickern des Matrixmaterials in den Absaugraum in einer gewünschten Weise zu beeinflussen. So kann es an Stellen, die von der Vakuumpumpe weiter entfernt sind, sinnvoll sein, tendenziell kleinere Porengrößen zu verwenden als in Bereichen des Werkzeugaufbaus, die näher zur Vakuumpumpe gelegen sind, um in den entfernteren Bereichen das Einsickern des Matrixmaterials in den Absaugraum zu verlangsamen.

Wenn ein Trennmaterial mit einer Porengröße zwischen 0,4 und 30 $\mu$m verwendet wird, ist die Herstellung einer entsprechenden Membran erheblich kostengünstiger. Eine solche Membran kann beispielsweise aus Polypropylen und schon durch bloßes Stretchen oder durch eine chemische Ätzung hergestellt werden. Eine chemische Ätzung ist beispielsweise möglich, indem das ursprüngliche Folienmaterial ein Calciumcarbonat enthält, das anschließend mit einer Säure aus dem Polyolefin-Verbund herausgeätzt werden kann. An den Fehlstellen des Calciumcarbonats bilden sich dann Poren aus, die eine der vorliegenden Erfindung entsprechende Porengröße aufweisen. Eine vorherige radioaktive Bestrahlung, wie das beispielsweise beim Track-Etch-Verfahren für matrixmaterialdichte Membranen zur Herstellung der feinen Porengrößen erforderlich ist, oder andere aufwendigere Bearbeitungsverfahren können bei Membranen mit größeren Porengrößen entfallen.

Eine Membran mit einer Porengröße von mehr als 0,4 $\mu$m hat für gängige für die Vakuuminfusion verwendeten Matrixmaterialsysteme keine harzsperrende Wirkung mehr, da solche Matrixmaterialsysteme Poren mit einer Porengröße von > 0,4 $\mu$m passieren können. Nach der Lehre der Erfindung dürfen keine völlig matrixmaterialdichten Membranen zur Trennung des Absaugraums vom Bauteilraum verwendet werden. Das gilt unabhängig davon, ob der Bauteilraum mit dem Trennmaterial flächig abgedeckt oder ob ein Schlauch als Absaugraum verwendet wird, der mit dem Trennmaterial vom Bauteilraum getrennt ist. Das Trennmaterial muss das Matrixmaterial nur so lange auf dem Weg in den Absaugraum bremsen, bis der Bauteilraum vollständig mit dem Matrixmaterial geflutet und das im Bauteilraum befindliche Fasermaterial vollständig mit dem Matrixmaterial getränkt ist. Während dieser Zeit darf nur so wenig Matrixmaterial in den Innenraum des Absaugraums gelangen, dass es weiterhin möglich ist, Gas aus dem noch nicht vollständig getränkten Bauteilraum durch das Trennmaterial in den Absaugraum abzusaugen, um dadurch eine vollständige Tränkung des Bauteilraums zu ermöglichen. Für diesen Zweck ist eine matrixmaterialbremsende und nicht matrixmaterialdichte Membran erforderlich.

Auf die Bremszeit, die das Trennmaterial auf das eingesetzte Matrixmaterialsystem ausüben muss, um den Bauteilraum vollständig befüllen zu können, hat auch die Größe und Form des herzustellenden Faserverbundbauteils einen erheblichen Einfluss. Je nach Bauteil können 5 min. oder 30 min. an Prozesszeit erforderlich sein, um den Bauteilraum vollständig mit dem Matrixmaterial auszufüllen. Bei einem identischen Matrixmaterialsystem kann für Bauteile mit einer niedrigeren Prozesszeit Trennmaterial mit einer größeren Porengröße verwendet werden, während es für Bauteile mit einer längeren Prozesszeit empfehlenswert ist, Trennmaterial mit einer kleineren Porengröße einzusetzen.

Nach einer Ausgestaltung der Erfindung erfolgt nach dem Sperren des Zulaufs des Matrixmaterials in das Werkzeug bei aufrecht erhaltenem Unterdruck im Absaugraum ein Druckausgleich im Bauteilraum durch die Migration des Matrixmaterials durch das Trennmaterial hindurch. Je nachdem, wie viel Matrixmaterial durch das Trennmaterial in den Innenraum des Absaugraums gelangt ist, ergeben sich im Bauteilraum unterschiedliche Druckverhältnisse. Die trockenen Fasern wurden vor Beginn der Infusion durch das Vakuum im Bauteilraum kompaktiert. Das Matrixmaterial wird mittels Umgebungsdruck in der Bauteilraum eigeleitet. Ohne einen gezielten Gegendruck stellen sich die Fasern komplett auf und die Druckverhältnisse gleichen sich aus. In diesem Fall findet eine Übersättigung der Fasern statt, was zu einem zu niedrigem Faservolumengehalt führt. Weiter vom Einleitungspunkt entfernt können sich die Fasern nicht komplett aufstellen, da durch die Reibung des Matrixmateriales in dem Aufbau ein Gegendruck entsteht, der ein vollständiges Aufrichten der Fasern verhindert. Hierdurch entsteht ein Laminat mit inhomogenen Faservolumengehalten und Wandstärken.

Da der Zufluss von weiterem Matrixmaterial in den Bauteilraum aus dem Reservoir aber bereits gesperrt ist, kann der Druckausgleich zwischen den unterschiedlichen Druckzonen innerhalb des Bauteilraums nur durch Materialbewegungen des Matrixmaterials erfolgen. Dabei ist es eine Besonderheit des offenbarten Trennmaterials, dass dieses auch die Rückströmung von Matrixmaterial aus dem Absaugraum in den Bauteilraum zulässt. So kann Matrixmaterial, das an einer Stelle des Trennmaterials vom Bauteilraum in den Absaugraum gelangt ist, an dieser oder an einer anderen Stelle wieder zurück in den Bauteilraum gelangen. Der Absaugraum fungiert auf diese Weise als eine Art Verteilkammer für die Verteilung des Matrixmaterials im Werkzeug.

Nach Absperren der Matrixmaterialzufuhr kann sich das Laminat allerdings nur bedingt nivellieren, da die Reibung im Aufbau über die Distanz zu groß ist. Das die Matrixmaterial bremsende Trennmaterial bietet einen definierten Widerstand gegenüber dem Matrixmaterial. Dadurch kann bei vollem Unterdruck so viel Matrixmaterial aus dem Bauteilraum in die Absaugkammer abfließen, dass ein homogenes Laminat im Bauteilraum entsteht. Je nach Viskosität des Matrixmaterialsystems beziehungsweise des Widerstands des Trennmaterials kann es sein, dass der Faservolumengehalt bei vollem Vakuum dann im Bauteil zu hoch wird. Dies kann durch ein Absenken des Vakuums im Absaugraum nach Abschluss der Infusion geregelt werden. Durch den geringeren Differenzdruck fließt weniger Matrixmaterial in den Absaugraum durch das Trennmaterial.

Ist die gewünschte Matrixmaterialmenge im Absaugraum, bietet sie weiterem Matrixmaterial, welches durch das Trennmaterial in die Absaugkammer fließen möchte, einen Widerstand, und der Matrixmaterialfluss durch das bremsende Trennmaterial kommt zum Erliegen. Der Faservolumengehalt des im Bauteilraum befindlichen Laminats gleicht sich durch die Druckdifferenzen zwischen den verschiedenen Bereichen und die dadurch ausgelösten Bewegungen des Matrixmaterials innerhalb des Werkzeugaufbaus nach der Infusion aus. Ein Vorteil ist der kurze Weg des Matrixmaterials durch das Trennmaterial, das eine Art Bremsfilm mit einem definierten Widerstand bietet.

Der Faservolumengehalt kann so über den Differenzdruck nach Infusion eingestellt werden. Je nach Matrixmaterialsystem kann es notwendig beziehungsweise hilfreich sein, im Absaugraum ein Verteilermedium zu verwenden, um überschüssiges Matrixmaterial aufnehmen zu können.

Durch den Druckausgleich ist es auch möglich, Gasblasen aus dem Matrixmaterial herauszuziehen, die sonst nicht mehr vom Unterdruck erreicht werden würden. Durch die weitere Bewegung des Matrixmaterials an dem gas- und matrixmaterialdurchlässigen Trennmaterial entlang und durch das Trennmaterial hindurch, das durch den Druckausgleich induziert wird, kommen mehr Gasblasen mit dem Trennmaterial in Kontakt. Dort können sich die Gasblasen auflösen, indem sich das Gas aus dem Matrixmaterial herauslöst und von dort in das Vakuum des Absaugraumes entweicht. Bauteile, die mit dem offenbarten Trennmaterial hergestellt worden sind, weisen eine erheblich niedrigere Fehlerquote durch Gaseinschlüsse im Matrixmaterial auf.

Die Qualität des mit dem offenbarten Trennmaterial hergestellten Bauteils ist auch deshalb höher, weil es über die durch den Druckausgleich induzierten Materialbewegungen des Matrixmaterials möglich ist, den Faservolumengehalt im Bauteilraum zu vergleichmäßigen. Für eine hohe Bauteilqualität ist es wünschenswert, einerseits sämtliche Fasern des Bauteils in einem Matrixmaterial einzubetten, andererseits aber auch über die erwünschte Einbettung des Fasermaterials hinaus keine unnötige zusätzliche Materialdicke nur aus Matrixmaterial aufzubauen, die die statische Belastbarkeit des Bauteils nicht verbessert und nur ein zusätzliches überflüssiges Gewicht im Bauteil darstellt. Über die Aufstellkräfte der Fasern und das Absaugen des Matrixmaterials aus dem Bauteilraum in den Absaugraum kann überschüssiges Matrixmaterial aus dem Bauteilraum entfernt werden, und zwar genau dort, wo dem Atmosphärendruck nicht der volle Gegendruck der aufgestellten Fasern entgegenwirkt. Das ist genau dort, wo das Matrixmaterial eine zu große Materialdicke aufgebaut hat. Der Atmosphärendruck drückt das überschüssige Matrixmaterial aus dem Bauteilraum durch das Trennmaterial in den Absaugraum, von wo aus es in einen Sammelbehälter abgeführt werden kann. Durch die Regelung des Unterdrucks von seiner Höhe und Zeit her kann mit dem offenbarten Trennmaterial über den Befüll- und Verteilungszeitraum des Matrixmaterials im Bauteilraum genau gesteuert werden, wie groß der Faservolumengehalt des im Bauteilraum hergestellten Bauteils tatsächlich ist.

Mit dem offenbarten Trennmaterial ist es auch möglich, gezielt ein größeres Volumen von Matrixmaterial durch den Bauteilraum zu fördern, als es erforderlich ist, um im Bauteilraum das fertige Bauteil herzustellen. Der Überschuss von Matrixmaterial, der über den Absaugraum durch das Trennmaterial hindurch gesaugt wird, dient dem Zweck, im Bauteilraum eine gleichmäßige Verteilung des Matrixmaterials bei einem möglichst hohen Faservolumengehalt mit einem geringen Anteil von Gasblasen im Matrixmaterial des fertigen Bauteils zu erzielen. Da das Trennmaterial so ausgestaltet ist, dass es den Durchtritt des Matrixmaterials mit der angegebenen Porengröße erheblich verlangsamt, aber nicht vollständig blockiert, entstehen die Druckdifferenzen, die die gewünschte Verteilung des Matrixmaterials im Bauteilraum und die Entfernung überschüssiger Mengen des Matrixmaterials ermöglichen.

Nach einer Ausgestaltung der Erfindung ist die Porengröße abgestimmt auf die Vernetzungsgeschwindigkeit des eingesetzten Matrixmaterialsystems. Die Vernetzungsgeschwindigkeit ist abhängig von der Reaktivität des eingesetzten Matrixmaterialsystems. Je reaktiver das verwendete Matrixmaterialsystem ist, umso schneller vernetzen sich die beim Mischen des Matrixmaterialsystems vorhandenen Moleküle zu längeren Molekülketten, die sich unmittelbar auf die Viskosität des Matrixmaterials und die von der Porengröße abhängige Bremswirkung der Membran auswirken. Bei einer gleichen Tränkungszeit muss für ein Matrixmaterialsystem mit einer höheren Vernetzungsgeschwindigkeit ein Trennmaterial mit einer größeren Porengröße verwendet werden als für ein Matrixmaterialsystem mit einer niedrigeren Vernetzungsgeschwindigkeit, um den Bauteilraum vollständig mit dem Matrixmaterial zu füllen. Da sich die Vernetzungsgeschwindigkeit auch auf das Fließverhalten und die Verteilgeschwindigkeit des Matrixmaterials innerhalb des Bauteilraums auswirkt, besteht bei einer zu hohen Vernetzungsgeschwindigkeit und einer zu kleinen Porengröße das Risiko, dass der Bauteilraum nicht vollständig ausgefüllt wird, bis die Harzfront im Bauteilraum zum Stehen kommt. Bei einer zu niedrigen Vernetzungsgeschwindigkeit und einer zu großen Porengröße besteht das Risiko, dass sich der Absaugraum zu schnell mit Matrixmaterial befüllt, so dass es dann nicht mehr möglich ist, über den Absaugraum aus denjenigen Bereichen des Bauteilraums Gas abzusaugen, der sich noch nicht vollständig mit Matrixmaterial gefüllt hat. Alternativ zur Veränderung der Porengröße können die Prozessparameter wie Temperatur, Fließhilfen oder Vorgelierzeit angepasst werden, um mit einer Porengröße möglichst viele Matrixmaterialsysteme abzudecken.

Nach einer Ausgestaltung der Erfindung ist die Porengröße abgestimmt auf die Viskosität des eingesetzten Matrixmaterialsystems. Die Viskosität zeigt den Vernetzungsgrad des eingesetzten Matrixmaterialsystems an. Die Vernetzung der Moleküle im Matrixmaterialsystem beginnt beim Zusammenmischen der Komponenten und schreitet je nach Reaktivität des verwendeten Matrixmaterialsystems schneller oder langsamer fort. In jedem Fall erhöht sich die Viskosität also während der Verarbeitungsdauer des verwendeten Matrixmaterialsystems. Sie kann aber je nach verwendetem Matrixmaterialsystem vom Start her erhebliche Unterschiede aufweisen. So können Epoxidharzsysteme eine geringere Viskosität aufweisen als Polyesterharze. Aber auch innerhalb solcher Systemklassen kann es durch eine gezielte Auswahl von chemischen Komponenten und deren Ausrüstung erhebliche Unterschiede in deren Viskosität geben. Die Viskosität eines Matrixmaterialsystems, das bei dem erfindungsgemäßen Verfahren verwendet werden soll, lässt sich Tabellen entnehmen, die die Hersteller der Matrixmaterialsysteme den Verwendern zur Verfügung stellen. In einer Prozesszeit von 15 min. kann sich die Viskosität eines ersten Matrixmaterials beispielsweise von 200 mPa s auf 350 mPa s und eines zweiten Matrixmaterials von 100 auf 10.000 mPa s erhöhen. Übliche für das Vakuuminfusionsverfahren verwendete Matrixmaterialsysteme weisen nach Beendigung des Anmischvorgangs und zu Beginn des Flutens des Bauteilraums eine Viskosität zwischen 150 und 300 mPa s auf.

Um zu bestimmen, ob die Porengröße ausreichend klein ausgewählt ist, um einen die vollständige Füllung des Bauteilraumes störenden Durchschlag des Matrixmaterials in den Absaugraum zu vermeiden, muss als relevanter Zeitraum die Summe der für das Mischen des Matrixmaterialsystems erforderlichen Zeit und die Befülldauer des Bauteilraums berücksichtigt werden.

Einen wesentlichen Einfluss auf die Viskosität des jeweiligen Matrixmaterialsystems hat die jeweilige Temperatur bei der Verarbeitung. Während bei Lochgrößen der Poren von 0,4 $\mu$m - 1 $\mu$m in einem Trennmaterial bei einer Temperatur des Matrixmaterialsystems von 30° C ein Durchschlag des Matrixmaterials durch die Membran nach 20 min. festzustellen ist, stellt sich bei einer Temperatur desselben Matrixmaterials von 45° C ein Durchschlag bereits nach 10 min. ein. Es ist also wichtig, die Verwendbarkeit eines Trennmaterials mit einer vorgegebenen Porengröße im Hinblick auf die Verarbeitungstemperatur des eingesetzten Matrixmaterialsystems zu beurteilen. Umgekehrt kann ein bei einer höheren Verarbeitungstemperatur für ein Trennmaterial mit einer bestimmten Porengröße ungeeignetes Matrixmaterialsystem geeignet gemacht werden, indem es mit einer niedrigeren Verarbeitungstemperatur verarbeitet wird.

Nach einer Ausgestaltung der Erfindung ist die Porengröße abgestimmt auf die Viskosität des eingesetzten Matrixmaterialsystems. Eine die Harzinfusion treibende Druckdifferenz zwischen dem Bauteilraum und/oder dem Absaugraum als erster Druckzone und dem den Werkzeugaufbau umgebenden Außenraum des Infusionsaufbaus als zweiten Druckraum, der beispielsweise unter einem atmosphärischen Druck oder einem künstlich erzeugten Überdruck stehen kann, kann bei bisher bekannten Vakuuminfusionsverfahren beispielsweise einem Atmosphärendruck entsprechend etwa max. 1.000 mbar bei vakuumunterstützten Infusionen ohne Einsatz einer Druckkammer betragen. Je nach Leistung der eingesetzten Vakuumpumpe und dem jeweiligen Infusionsaufbau ist es aber nicht immer möglich, dieses theoretische Potential voll auszunutzen. Bei niedrigeren Differenzdrücken verlängert sich die Prozesszeit, die erforderlich ist, um den Bauteilraum vollständig mit Matrixmaterial auszufüllen. Bei längeren Prozesszeiten aufgrund eines niedrigeren Differenzdrucks ist es deshalb tendenziell vorteilhaft, ein Trennmaterial mit einer kleineren Porengröße zu verwenden, während bei höheren Differenzdrücken auch ein Trennmaterial mit größeren Porengrößen verwendet werden kann. Der Differenzdruck kann bei Systemen, bei denen das Matrixmaterial unter Druck zugeführt wird, den Atmosphärendruck übersteigen. Unter solchen Druckverhältnissen gelten besondere Bedingungen für die einsetzbaren Porengrößen.

Für alle vorstehend beschriebenen Methoden, zu ermitteln, ob eine bestimmte Porengröße aus dem Bereich von 0,4 $\mu$m bis 30 $\mu$m zur Anwendung eines bestimmten Matrixmaterialsystems in einem bestimmten Werkzeugaufbau zur Herstellung eines Faserverbundbauteils geeignet ist, kann Darcys Gesetz herangezogen werden, das in der folgenden Formel niedergelegt ist:

$$\frac{q}{A} - v_f - -k_f \times i$$

q = Durchflussrate m³/s

A = Querschnittsfläche = Poren + Membranfläche

$\vartheta_f$ = Filtergeschwindigkeit

i = hydraulischer Gradient

$k_f$ = Durchlässigkeitsbeiwert

$$k_f = K \times \frac{\rho_f}{n_f} \times g$$

Der Durchlässigkeitsbeiwert kann auch experimentell ermittelt werden.

Die Permeabilität setzt sich wie folgt zusammen:

$$K = \frac{Q \times n \times x}{A \times \Delta p}$$

K = Permeabilität

Q = Volumenstrom

n = Viskosität

x = Fließlänge

$\Delta p$ = Differenzdruck

Unter Anwendung der vorstehenden Formeln kann eine für ein bestimmtes Matrixmaterial geeignete Porengröße festgelegt werden, um einen Anhaltswert für die Bremsdauer des Trennmaterials zu erhalten.

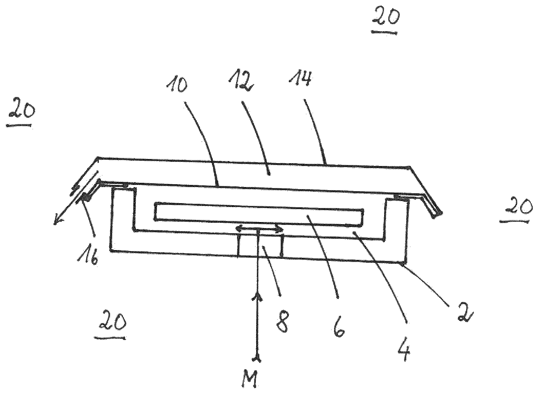

In der beigefügten Figur ist schematisch ein geeigneter Aufbau zur Anwendung des Verfahrens gezeigt.

In einem Werkzeug 2 ist ein Bauteilraum 4 ausgebildet, in den ein Faserverbund-Halbzeug 6 eingelegt ist. Über den Zulauf 8 kann ein Matrixmaterial M in den Bauteilraum 4 einströmen, wie durch den Pfeil angedeutet. Über den Bauteilraum 4 ist Trennmaterial 10 dichtend aufgelegt. Das Trennmaterial 10 bildet eine Abgrenzung des Absaugraums 12 zum Bauteilraum 4. Zur Werkzeugumgebung und nach außen hin ist der Absaugraum 12 mit einem gas- und matrixmaterialdichten Abdeckmaterial 14 abgedichtet. Das Abdeckmaterial 14 ist zumindest an den Rändern so mit einer Trennmembran 10 verbunden, dass dort von außen bei einem an dem Absaugraum 12 anliegendem Vakuum kein Gas von außen aus der Werkzeugumgebung 20 außerhalb des Werkzeugs 2 und des Abdeckmaterials 14 in den Absaugraum 12 einströmen kann.

Wenn ein Vakuum an den Absaugraum 12 angelegt wird, strömt das Matrixmaterial M über den Zulauf 8 in den Bauteilraum 4 und verteilt sich darin. Da die Trennmembran 10 aus einem flächigen monolithischen diffusionsoffenen Kunststoffmaterial oder einem verdichteten Vlies das Matrixmaterial M bremst, gelangt das Matrixmaterial M nur langsam in den Absaugraum 12. Während dieser Zeit kann Gas, das sich noch im Bauteilraum 4 befindet, über die Trennmembran aus dem Bauteilraum 4 abgesaugt werden. Das Gas wird über die Absaugleitung 16 aus dem Absaugraum 12 evakuiert.

## Patentansprüche

1. Verfahren zur Herstellung von Faserverbundbauteilen mittels eines Vakuum-Injektionsverfahrens mit den Schritten:

   - Anordnen des Faserverbund-Halbzeugs (6) in einem Bauteilraum (4) auf einem Werkzeug (2),
   - Anordnen und Positionieren eines dem Bauteilraum (4) benachbarten Absaugraums (12) zur Evakuierung von Gas aus dem Bauteilraum (4) mit einer den Absaugraum (12) vom Bauteilraum (4) trennenden Trennmembran (10),
   - Abdichten des Bauteilraums (4) und des Absaugraums (12) zur Werkzeugumgebung (20) mit einem gas- und matrixmaterialdichten Trennmaterial (14),
   - Anlegen eines Vakuums an den Absaugraum (12),
   - Einleiten eines Matrixmaterials (M) in den Bauteilraum (4),
   - Aushärten und Entformen des fertigen Faserverbundbauteils,

   wobei der Bauteilraum (4) dabei mit einer Trennmembran (10) abgedichtet ist, die mit einer Porengröße zwischen 0,4 und 30 μm eine stark matrixmaterialbremsende Wirkung aufweist, jedoch nicht matrixmaterialdicht ist, **dadurch gekennzeichnet, dass** nach dem Sperren des Zulaufs (8) des Matrixmaterials in das Werkzeug (2) bei aufrecht erhaltenem Unterdruck im Absaugraum (12) ein Druckausgleich im Bauteilraum (4) durch die Migration des Matrixmaterials aus dem Absaugraum (12) wieder zurück in den Bauteilraum (4) durch die Trennmembran (10) hindurch erfolgt, so dass der Absaugraum (12) als eine Verteilkammer für die Verteilung des Matrixmaterials im Werkzeug fungiert.

2. Verfahren nach Anspruch 1, **dadurch gekennzeichnet, dass** die Porengröße abgestimmt ist auf die Vernetzungsgeschwindigkeit des eingesetzten Matrixmaterialsystems.

**3.** Verfahren nach Anspruch 1 oder 2, **dadurch gekennzeichnet, dass** die Porengröße abgestimmt ist auf die Viskosität des eingesetzten Matrixmaterialsystems.

**4.** Verfahren nach einem der vorhergehenden Ansprüche, **dadurch gekennzeichnet, dass** die Porengröße abgestimmt ist auf den Differenzdruck des eingesetzten Matrixmaterialsystems.

**Claims**

**1.** Method for producing fibre composite components by means of a vacuum injection method, comprising the following steps:

- arranging the fibre composite semi-finished product (6) in a component chamber (4) on a tool (2),
- arranging and positioning a suction chamber (12) for evacuating gas from the component chamber (4) adjacent to the component chamber (4) by means of a separation membrane (10) which separates the suction chamber (12) from the component chamber (4),
- sealing the component chamber (4) and the suction chamber (12) relative to the tool surroundings (20) using a separation material (14) which is impervious to gas and to matrix material,
- applying a vacuum to the suction chamber (12),
- introducing a matrix material (M) into the component chamber (4),
- curing and demoulding the finished fibre composite component,

the component chamber (4) in this case being sealed using a separation membrane (10) which, having a pore size between 0.4 and 30 $\mu$m, has a strong matrix material-braking effect but is not impervious to matrix material, **characterised in that**, after the matrix material inlet (8) into the tool (2) is blocked, while the vacuum is maintained in the suction chamber (12), the pressure in the component chamber (4) is equalised by the migration of the matrix material out of the suction chamber (12) back into the component chamber (4) through the separation membrane (10), such that the suction chamber (12) acts as a distribution chamber for the distribution of the matrix material in the tool.

**2.** Method according to claim 1, **characterised in that** the pore size is matched to the crosslinking rate of the matrix material system used.

**3.** Method according to either claim 1 or claim 2, **characterised in that** the pore size is matched to the viscosity of the matrix material system used.

**4.** Method according to any of the preceding claims, **characterised in that** the pore size is matched to the differential pressure of the matrix material system used.

**Revendications**

**1.** Procédé de fabrication d'éléments composites en fibres au moyen d'un procédé d'injection sous vide avec les étapes de :

- l'agencement du demi-produit composite en fibres (6) dans un espace d'élément (4) sur un outil (2),
- l'agencement et le positionnement d'un espace d'aspiration (12) contigu à l'espace d'élément (4) pour l'évacuation de gaz de l'espace d'élément (4) avec une membrane de séparation (10) séparant l'espace d'aspiration (12) de l'espace d'élément (4),
- l'étanchéité de l'espace d'élément (4) et de l'espace d'aspiration (12) par rapport à l'environnement d'outil (20) avec un matériau de séparation (14) étanche au matériau gazeux et matriciel,
- la création d'un vide sur l'espace d'aspiration (12),
- l'introduction d'un matériau matriciel (M) dans l'espace d'élément (4),
- le durcissement et la déformation de l'élément composite en fibres fini,

dans lequel l'espace d'élément (4) est rendu étanche avec une membrane de séparation (10), qui présente avec une grandeur de pore entre 0,4 et 30 $\mu$m un effet freinant fortement le matériau matriciel, toutefois n'est pas étanche au matériau matriciel, **caractérisé en ce qu'**après le verrouillage de l'amenée (8) du matériau matriciel dans l'outil (2) en cas de dépression maintenue dans l'espace d'aspiration (12) une compensation de pression dans l'espace d'élément (4) est de nouveau réeffectuée par la migration du matériau matriciel hors de l'espace d'aspiration (12) dans l'espace d'élément (4) au travers de la membrane de séparation (10) de sorte que l'espace d'aspiration (12) fonctionne comme une chambre de distribution pour la distribution du matériau matriciel dans l'outil.

2. Procédé selon la revendication 1, **caractérisé en ce que** la grandeur de pore est adaptée à la vitesse de réticulation du système de matériau matriciel utilisé.

3. Procédé selon la revendication 1 ou 2, **caractérisé en ce que** la grandeur de pore est adaptée à la viscosité du système de matériau matriciel utilisé.

4. Procédé selon l'une quelconque des revendications précédentes, **caractérisé en ce que** la grandeur de pore est adaptée à la pression différentielle du système de matériau matriciel utilisé.

**EP 3 421 228 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1181149 B1
- DE 202010001836 U1
- DE 102009044515 A1